(19) Europäisches Patentamt / European Patent Office / Office européen des brevets

(11) **EP 3 656 892 B1**

(12) **EUROPEAN PATENT SPECIFICATION**

(45) Date of publication and mention
of the grant of the patent:
**07.06.2023 Bulletin 2023/23**

(21) Application number: **18306541.6**

(22) Date of filing: **21.11.2018**

(51) International Patent Classification (IPC):
$C25B\ 1/04$ (2021.01)   $C25B\ 3/03$ (2021.01)
$C25B\ 3/07$ (2021.01)   $C25B\ 3/26$ (2021.01)
$C25B\ 9/15$ (2021.01)   $C25B\ 11/052$ (2021.01)
$C25B\ 11/057$ (2021.01)   $C25B\ 11/061$ (2021.01)
$C25B\ 11/077$ (2021.01)   $C25D\ 3/38$ (2006.01)
$C25D\ 5/50$ (2006.01)   $C25D\ 11/34$ (2006.01)

(52) Cooperative Patent Classification (CPC):
**C25B 1/04; C25B 3/03; C25B 3/07; C25B 3/26;
C25B 9/15; C25B 11/052; C25B 11/057;
C25B 11/061; C25B 11/077; C25D 3/38;
C25D 5/50; C25D 11/34;** Y02E 60/36; Y02P 20/133

(54) **METHOD FOR CO2 REDUCTION INTO HYDROCARBONS**

VERFAHREN FÜR CO2-REDUKTION ZU KOHLENWASSERSTOFFEN

PROCÉDÉ DE RÉDUCTION DE CO2 EN HYDROCARBURES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.05.2020 Bulletin 2020/22**

(73) Proprietors:
• **Paris Sciences et Lettres**
**75006 Paris (FR)**
• **Centre National de la Recherche Scientifique
(CNRS)**
**75016 Paris (FR)**
• **Sorbonne Université**
**75006 Paris 6 (FR)**
• **Collège de France**
**75005 Paris (FR)**

(72) Inventors:
• **FONTECAVE, Marc**
**38330 SAINT ISMIER (FR)**
• **MOUGEL, Victor**
**8046 ZURICH (CH)**
• **TRAN NGOC, Huan**
**92160 ANTONY (FR)**
• **ALVES DALLA CORTE, Daniel**
**94120 FONTENAY SOUS BOIS (FR)**
• **LAMAISON, Sarah**
**64500 SAINT JEAN-DE-LUZ (FR)**
• **LUTZ, Lukas**
**73527 Schwäbisch Gmünd (DE)**

(74) Representative: **Regimbeau**
**20, rue de Chazelles**
**75847 Paris Cedex 17 (FR)**

(56) References cited:
**WO-A1-2017/186454    WO-A2-2012/082717**

• **TRAN NGOC HUAN ET AL: "A Dendritic
Nanostructured Copper Oxide Electrocatalyst for
the Oxygen Evolution Reaction", ANGEWANDTE
CHEMIE INTERNATIONAL EDITION, vol. 56, no.
17, 4 April 2017 (2017-04-04) , pages 4792-4796,
XP055567770, DE ISSN: 1433-7851, DOI:
10.1002/anie.201700388**

Remarks:
The file contains technical information submitted after
the application was filed and not included in this
specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

The present invention relates to a method for converting (i.e. reducing) $CO_2$ into hydrocarbons using an electrolyser in which both the anode and the cathode are a copper-based electrode.

**BACKGROUND**

Renewable energies (e.g. solar energy) suffer from intermittency issues due to i) their challenging connection to the electrical grid and ii) the volatility of the so-generated electricity price. To smooth the curve of electricity available on the grid for better fitting to the consumption curve and best valorize surplus production, storing electrical energy as chemical fuels thanks to an electrolyser is highly relevant. Thus conversion of carbon dioxide into hydrocarbons using renewable energy is an attractive strategy for storing such a renewable source of energy into the form of chemical energy (a fuel). In addition to the conversion of renewable electrical energy (or any other electrical energy) to fuels and thus for the production of renewable carbon-based products, such a conversion can be useful for valorizing industrial COz waste and maximize profitability whilst vastly increasing the sustainability of the petrochemical industry.

In order to do so, it is not only the electrocatalysts but also their combination in a fully defined electrolysis cell (EC) that must be optimized. The electrocatalysts used on the anodic side where water oxidation occurs (also called Oxygen Evolution Reaction (OER)) and the cathodic side where carbon-based products are evolved must meet the three performance criteria which are i) high activity (high current density at low overpotential), ii) good stability and iii) selectivity.

$$2H_2O \rightarrow O_2 + 4H^+ + 4e^- \qquad \text{Anodic side}$$

$$x\ CO_2 + (4x\text{-}2z\text{-}y)\ H^+ + (4x\text{-}2z\text{-}y)\ e^- \rightarrow C_xH_yO_z + (2x\text{-}z)\ H_2O \qquad \text{Cathodic side}$$

A particular interest is given to systems able to prepare hydrocarbons, as $CO_2$ hence constitutes an alternative to fossil fuel-based chemical precursors. The full system then has to be further engineered to maximize the energy efficiency by i) minimizing the resistive losses and ii) enhance the product selectivity. The difficulty of designing an efficient electrocatalytic system is that the combination of the most efficient materials taken independently will not necessarily lead to the most efficient system as a whole.

To date, only very few functional systems for the electrochemical transformation of $CO_2$ have been reported. The most important factors to evaluate an electrolyzer for $CO_2$ reduction are its production of high added-value products, in particular hydrocarbons but also alcohols, with high energetic efficiency, and its low cost.

Two EC systems have been reported for the production of hydrocarbons and alcohols by $CO_2$ reduction (Yeo et al., ACS Sustainable Chem. Eng. 2017, 5, 9191-9199; Ager et al., Energy Environ. Sci., 2017, 10, 2222-2230). However, these systems use rare metals at the anode (iridium oxide) and thus are expensive, and they reach energy efficiencies of only 10.3% and 12.2%, respectively.

EC cells using earth-abundant catalysts (Fe and Co in Savéant et al., PNAS May 2, 2016. 201604628; Sn and Cu in Grätzel et al., Nat. Energy 2, 17087 (2017); ACS Catal 2016, 6, 3092) for electrochemical reduction of $CO_2$ at high current density have been described, but they afford only carbon monoxide as products which has a lower value than hydrocarbons or even alcohols.

WO2017/186454A1 discloses a metal / metal chalcogenide electrode with thigh specific surface area. WO2012/082717A2 discloses porous metal dendrites for high efficiency aqueous reduction of $CO_2$ to hydrocarbons. Huan et al., Angew. Chem. Int. Ed. 2017, 56, 4792-4796 discloses a dendritic nanostructured copper oxide electrocatalyst for the oxygen evolution reaction.

Thus, there remains still a need for a low cost electrolyser for $CO_2$ reduction which is able to produce high added-value products, in particular hydrocarbons, with high energetic efficiency.

**SUMMARY OF THE INVENTION**

The present invention relates to a method for reducing $CO_2$ into hydrocarbons comprising:

a) providing an electrolysis device comprising an anode and a cathode;
b) exposing the cathode of said electrolysis device to a $CO_2$-containing aqueous catholyte solution;
c) exposing the anode of said electrolysis device to an aqueous anolyte solution; and
d) applying an electrical current between the anode and the cathode in order to reduce the carbon dioxide into hydrocarbons;

wherein the catholyte solution comprises a salt of hydrogen carbonate, and the anolyte solution comprises a salt of carbonate.

wherein the anode and the cathode each are an electrode comprising an electrically conductive support of which at least a part of the surface is covered by a metal deposit of copper,

wherein the metal deposit may comprise other metals than copper selected from iron, nickel, zinc, cobalt, manganese, titanium, gold, silver, lead, ruthenium, iridium and a mixture thereof, said other metals representing no more than 30% by weight of the metal deposit,

wherein the surface of the metal deposit is in an oxidized form and the metal deposit has a specific surface area greater than or equal to 1 $m^2/g$, the specific surface area being determined by the BET (Brunauer, Emmett and Teller) method,

wherein the electrode is obtainable by a method comprising the following successive steps:

(i) electroplating copper on at least a portion of the surface of an electrically conductive support to form a metal deposit of copper on said at least a portion of the surface of the electrically conductive support,
(ii) oxidation of the surface of said metal deposit, and
(iii) optionally deposition of metal oxide on the surface of the metal deposit.

The electrolysis device used in a method according to the invention allows the $CO_2$ reduction to hydrocarbons with a very low potential for hydrocarbon generation (2.95V at 25 $mA/cm^2$ vs. 4V at 25 $mA/cm^2$ for the best system known to date and described in Energy Environ. Sci. 2017, 10, 2222-2230).

Surprisingly, while it was thought that such a high efficiency required the use of rare metal electrodes (e.g. iridium oxide), it has been observed that the low-cost electrolysis device in which the anode and the cathode each are an electrode comprising a copper oxide-based catalyst having a high specific surface area (copper being a very cheap and abundant metal) can allow unexpectedly high efficiencies. Thus said electrode comprising a copper oxide-based catalyst having a high specific surface area is effective for both Oxygen Evolution Reaction (OER) and $CO_2$ reduction into hydrocarbons. Moreover, the reduction of $CO_2$ is performed with a high selectivity for ethane and ethylene (also called ethene).

The electrolysis device used in a method according to the invention not only reaches an unprecedented 21% energy efficiency compared to the two other systems' efficiency not exceeding 12.2% as referenced in Table 1 below but also uses non-noble metal-based catalysts while in the two referenced cases, Ir and/or Ag was employed.

Table 1.

| Device | Cathode | Anode | FY of $C_2H_4$ & $C_2H_6$ | Energy efficiency of E-cell |
|---|---|---|---|---|
| **(1)** | **CuAg** | **IrO$_2$** | 30% | 10.3% |
| **(2)** | **Cu oxide** | **IrO$_2$** | 32% | 12.2% |
| **(3)** | **DN-CuO** | **DN-CuO** | 47% | 21% |
| *(1) Ager et al., Energy Environ. Sci., 2017, 10, 2222-2230*<br>*(2) Yeo et al., ACS Sustainable Chem. Eng. 2017, 5, 9191-9199;*<br>*(3) used in the invention (see the examples for the preparation of the electrodes)* | | | | |

In addition, the use of the same metal at both electrodes (anode and cathode) is a significant advantage as it simplifies significantly the long-term operation of the electrolyzer. Indeed, in this case, the dissolution and redeposition of metal which may occurs from the anode to the cathode will have no deleterious effect, whereas a high complex membrane set-up has to be used to avoid this risk when different metals are used at the electrodes, which impacts negatively the resistive losses of the full system.

**DEFINITIONS**

For the purposes of the present invention, the term "electrolysis device", also called "electrolyzer", is intended to mean a device for converting electrical energy, in particular renewable electrical energy, into chemical energy.
The term "flow electrolysis device" is intended to mean an electrolysis device as defined above in which the electrolysis reaction is performed in a continuous process and not in a batch process, i.e. that anolyte and catholyte solutions are continuously flowed through the device.

By "electrode" is meant in the sense of the present invention an electronic conductor capable of capturing or releasing electrons. The electrode that releases electrons is called an "anode". The electrode that captures electrons is called a "cathode". Thus, an oxidation reaction occurs at the anode, whereas a reduction reaction occurs at the cathode.

By "electrolyte solution" is meant, in the present invention, a solution, preferably an aqueous solution, in which a substance is dissolved so that the solution becomes electrically conductive. This substance is named "electrolyte". A "catholyte solution" is an "electrolyte solution" used at the cathode. A "anolyte solution" is an "electrolyte solution" used at the anode.

For the purposes of the present invention, the term "electrically conductive support" means a support capable of conducting electricity.

For the purposes of the present invention, the term "metal deposit", is understood to mean the deposit of a metal (copper in the present invention) at the oxidation state 0. The metal deposit thus forms a metal layer on the surface of the support.

For the purposes of the present invention, the term "oxidized form" of a metal M is understood to mean the chemical forms $M_xO_y$, and mixtures thereof where x and y represent integers depending on the degree of oxidation of the metal M. More particularly, in the case of copper, the oxidized forms may be $CuO$ and $Cu_2O$ (preferably $CuO$). In particular, these will be $CuO$ forms.

The term "flow spacer" refers to a system that guides the flow of an electrolyte solution (catholyte or anolyte solution) from the inlet to the outlet of the cathodic or anodic compartment in an electrolysis device. The flow spacer allows improving this flow.

The term "$(C_1$-$C_6)$alkyl", as used in the present invention, refers to a straight or branched monovalent saturated hydrocarbon chain containing from 1 to 6 carbon atoms including, but not limited to, methyl, ethyl, n-propyl, iso-propyl, n-butyl, iso-butyl, sec-butyl, t-butyl, n-pentyl, n-hexyl, and the like. It can be in particular a methyl or an ethyl.

The term "hydrocarbon", as used in the present invention, refers to a linear or branched saturated or unsaturated hydrocarbon molecule. Preferably, it is a $C_2$ or $C_3$ hydrocarbon, i.e. ethane or ethylene.

The term "alcohol", as used in the present invention, refers to a molecule of formula R-OH, wherein R represents a straight or branched monovalent saturated or unsaturated hydrocarbon chain. Preferably, it is a $C_2$ or $C_3$ alcohol, i.e. ethanol, n-propanol or isopropanol.

## DETAILED DESCRIPTION

### Electrolysis device

The electrolysis device used in a method according to the invention is an electrolysis device in which both the anode and the cathode are copper-based electrodes.

### Electrode

Both the anode and the cathode of the electrolysis device are an electrode comprising an electrically conductive support of which at least a part of the surface is covered by a metal deposit of copper, the surface of said metal deposit being in an oxidized form and the metal deposit having a high specific surface area, and more particularly a specific surface greater than or equal to 1 $m^2$/g.

The electrically conductive support will comprise or consist of an electrically conductive material which may be a composite material consisting of several distinct electroconductive materials. The electrically conductive material may be chosen in particular from a metal such as copper, steel, aluminum, zinc or titanium; a metal oxide such as Fluorine-doped Titanium Oxide (FTO) or Indium Tin Oxide (ITO); a metal sulphide such as cadmium sulphide or zinc sulphide; carbon in particular in the form of carbon felt, graphite, vitreous carbon, boron-doped diamond; a semiconductor such as silicon; and a mixture thereof.

This support may take any form suitable for use as an electrode, the person skilled in the art being able to determine the shape and dimensions of such a support according to the intended use.

The surface of such a support is at least partially covered by the metal deposit. Advantageously, at least 5%, in particular at least 20%, especially at least 50%, preferably at least 80%, of the surface of the support is covered by the metal deposit. According to a particular embodiment, the entire surface of the support is covered by the metal deposit.

The metal deposit advantageously has a thickness of between 10 $\mu$m and 2 mm, in particular between 50 $\mu$m and 0.5 mm, preferably between 70 $\mu$m and 300 $\mu$m.

Such a thickness can be measured in particular by measuring a sample cut by Scanning Electron Microscopy (SEM), for example using a scanning electron microscope Hitachi S-4800.

The metal deposit has a high specific surface area.

The metal deposit has a specific surface area greater than or equal to 1 $m^2$/g, in particular greater than or equal to 2 m²/g, in particular greater than or equal to 3 m²/g, for example greater than or equal to 5 m²/g or still greater than or equal to 10 m²/g. The specific surface area may be between 1 m²/g and 500 m²/g, for example between 1 m²/g and 200 m²/g, in particular between 2 m²/g and 100 m²/g, preferably between 3 m²/g and 50 m²/g, for example between 5 m²/g and 50 m²/g or between 10 m²/g and 50 m²/g. The specific surface area value is indicated per gram of metal deposit. Such a specific surface area is determined by the BET (Brunauer, Emmett and Teller) method. This BET method will advantageously be applied to a metal deposit sample obtained by mechanical abrasion using a PVC (polyvinyl chloride) blade having a thickness of 1 mm of said metal deposit present on the electrically conductive support.

The specific surface area can also be expressed in $cm^2/cm^2_{geometric}$. In this case, the specific surface area value is indicated per $cm^2$ of electrode and may advantageously be greater than or equal to 5 $cm^2/cm^2_{geometric}$, in particular greater than or equal to 10 cm $cm^2/cm^2_{geometric}$, in particular greater than or equal to 15 $cm^2/cm^2_{geometric}$. The specific surface area may be between 5 and 500 $cm^2/cm^2_{geometric}$, for example between 10 and $cm^2/cm^2_{geometric}$, in particular between 15 and 100 $cm^2/cm^2_{geometric}$, preferably between 15 and 50 $cm^2/cm^2_{geometric}$. Such a specific surface area is advantageously determined by electrochemical measurement (via the Randles-Sevcik equation), more particularly according to the following conditions. The electroactive surface of the electrode can be measured using a 1 $cm^2$ geometric surface electrode immersed in a solution containing $K_3[Fe(CN)_6]$ 5 mM and a phosphate buffer 0.1 M, pH 7.0. The application of equation (1) then makes it possible to determine the electroactive surface value Adiff, and consequently the specific surface area determined by electrochemistry, by dividing this value by the geometrical surface of the electrode according to the relation: Specific surface area determined by electrochemistry = $A_{diff}/A_{geometric}$ (in $cm^2/cm^2_{geometric}$). The Randles-Sevcik equation equation (1) is as follows:

$$i_p = 2.69 \times 10^5 \, n^{3/2} D^{1/2} A_{diff} C \, v^{1/2} \qquad (1)$$

The metal deposit will also advantageously have a porous structure.

The metal deposit will advantageously have a porosity with an average pore size of between 10 $\mu$m and 500 $\mu$m, in particular between 20 $\mu$m and 200 $\mu$m, preferably between 30 $\mu$m and 70 $\mu$m. The average pore size can be determined by means of photographs obtained by Scanning Electron Microscopy (SEM) or Scanning Tunneling Microscopy (STM), preferably by Scanning Electron Microscopy (SEM), for example using a scanning electron microscope Hitachi S-4800.

Other metals than copper may be present in this metal deposit layer, such as iron, nickel, zinc, cobalt, manganese, titanium, gold, silver, lead, ruthenium, iridium or a mixture thereof. These other metals will not represent more than 30% by weight of the metal deposition layer. preferably, no other metal than copper is present.

The surface of this metal deposit (i.e. the outer surface of the metal deposit not in contact with the electrically conductive support) is in an oxidized form, that is the metal on the surface of this metal deposit is in an oxidized form (e.g. CuO).

The thickness of the oxidized layer on the surface of the metal deposit is not critical. For example it may be between 1 nm and 1 $\mu$m, preferably between 10 and 500 nm, notably of about 250 nm.

This thickness can be measured by Transmission Electron Microscopy (TEM) of a section of the electrode made by the Focused Ion Beam (FIB) technique.

This metal deposit which is oxidized in surface represents the catalytic system that makes it possible, in an electrolysis process, to oxidize the water to dioxygen on the anodic side and to convert $CO_2$ into hydrocarbons on the cathodic side.

Such an electrode is obtainable by the method detailed below.

Method to prepare the electrode

The electrode is obtainable by a method comprising the following successive steps:

(i) electroplating copper on at least a portion of the surface of an electrically conductive support to form a metal deposit of copper on said at least a portion of the surface of the electrically conductive support,
(ii) oxidation of the surface of said metal deposit, and
(iii) optionally deposition of metal oxide on the surface of the metal deposit.

The electrically conductive support will be as defined above. Thus, such a support will consist, at least in part and preferably completely, of an electrically conductive material which may be a composite material consisting of several distinct electroconductive materials. The electrically conductive material may be chosen in particular from a metal such as copper, steel, aluminum, zinc or titanium; a metal oxide such as Fluorine-doped Titanium Oxide (FTO) or Indium Tin Oxide (ITO); a metal sulphide such as cadmium sulphide or zinc sulphide; carbon in particular in the form of carbon felt, graphite, vitreous carbon, boron-doped diamond; a semiconductor such as silicon; and a mixture thereof.

This support may take any form suitable for use as an electrode, the person skilled in the art being able to determine the shape and dimensions of such a support according to the intended use. The surface of such a support is at least partially covered by the metal deposit. Advantageously, at least 5%, in particular at least 20%, especially at least 50%, preferably at least 80%, of the surface of the support is covered by the metal deposition. According to a particular embodiment, the entire surface of the support is covered by the metal deposit.

This electrically conductive support will advantageously be cleaned before performing electroplating according to techniques well known to those skilled in the art.

*Step (i):*

The electroplating step may advantageously be carried out according to the following steps:

(a) at least partially immersing the electrically conductive support in an acidic aqueous solution containing ions of the metal to be deposited, i.e. copper, and
(b) applying a current between the electrically conductive support and a second electrode.

*Step (a):*

The acidic aqueous solution containing ions of the metal to be deposited, i.e. copper, will be more particularly an acidic aqueous solution containing a salt of the metal to be deposited (also called metal salt), optionally introduced in a hydrated form. This metal salt, optionally in a hydrated form, may be any water-soluble salt of copper. It may be for example $CuSO_4$, $CuCl_2$, or $Cu(ClO_4)_2$; in particular $CuSO_4$.

The metal salt will be present in the aqueous solution advantageously at a concentration of between 0.1 mM and 10 M, in particular between 1 mM and 1 M.

It could also be envisaged to use metal complexes formed between the metal ion to be deposited and one or more organic ligands such as, for example, porphyrins, amino acids or amines, to introduce the metal ions into the aqueous solution.

The acid introduced into the acidic aqueous solution may be any acid, whether organic or inorganic. It may be for example sulfuric acid, hydrochloric acid, hydrobromic acid, formic acid or acetic acid, especially sulfuric acid. Preferably, it will not be nitric acid. This acid may be present in the acidic aqueous solution advantageously at a concentration of between 0.1 mM and 10 M, in particular between 10 mM and 3 M.

The acidic aqueous solution is advantageously prepared using deionized water to better control the ionic composition of the solution.

The electrically conductive support will be totally or partially immersed in the acidic aqueous solution containing the ions of the metal to be deposited, depending on whether a deposit over the entire surface or only of a part of the surface of the support is desired.

In order to obtain a deposit on only a portion of the surface of the support, it may also be envisaged to apply a mask consisting of an insulating material on the parts of the support which must not be covered by the metal deposit. In this case, the complete support, on which the mask has been applied, may be immersed in the acidic aqueous solution containing the ions of the metal to be deposited. This mask will be removed from the support after deposition of the metal.

*Step (b):*

In this step, the electrically conductive support will act as a cathode, while the second electrode will play the role of anode.

The second electrode will advantageously be immersed in the acidic aqueous solution containing the ions of the metal to be deposited but may also be immersed in another electrolyte solution electrically connected to the acidic aqueous solution. The use of a single electrolyte solution, namely the acidic aqueous solution containing the ions of the metal to be deposited, remains preferred.

The nature of the second electrode is not critical. It is just necessary for performing the electroplating by an electrolysis process. It may be for example a platinum or titanium electrode.

The current applied between the electrically conductive support and the second electrode may be alternating or direct. It will advantageously be direct and will preferably have a high current density of between 0.1 $mA/cm^2$ and 5 $A/cm^2$, in particular between 0.1 $mA/cm^2$ and 1 $mA/cm^2$. Alternatively, a voltage for generating an equivalent current density may be applied between the electrodes.

When applying the current, two reduction reactions will take place at the cathode:

- on the one hand the reduction of metal ions to metal of oxidation state 0 according to the following reaction with M representing the metal, i.e. copper, and x representing its initial degree of oxidation:

$$M^{x+} + xe^- \rightarrow M$$

- on the other hand the reduction of protons into dihydrogen according to the following reaction:

$$2H^+ + 2e^- \rightarrow H_2$$

Similarly, an oxidation reaction will take place at the anode during the application of the current. The nature of this oxidation reaction is not crucial. It may be for example the oxidation of water.

The electroplating thus allows the deposition on the surface of the electrically conductive support of a thin layer of metal with a high specific surface, the growth of the metal on the surface of the electrically conductive support being made in a dendritic manner. In addition, the formation of hydrogen bubbles on the surface of the electrically conductive support, thanks to the proton reduction reaction, also makes it possible to confer a porous structure to this metal deposit layer, thus making it possible to further increase its specific surface area. The choice of the current density will make it possible in particular to optimize the size and the number of bubbles formed so as to obtain the desired structure and specific surface area for the metal deposit.

The current will also be applied for a time sufficient to obtain the desired amount of deposit, in particular to obtain a thickness of said metal deposit layer of between 10 $\mu$m and 2 mm, in particular between 50 $\mu$m and 0.5 mm, preferably between 70 $\mu$m and 300 $\mu$m. For example, the current may be applied for a period of between 1 and 3600 s, for example between 15 and 1200 s, in particular between 30 and 300 s.

The duration of application and the current density may be adapted according to the chosen reaction conditions such as the nature and concentration of the metal ions, the concentration of acid, etc. to obtain the desired metal deposit, especially with the desired specific surface area and thickness.

The electroplating will be advantageously carried out by a galvanostatic method, that is to say by applying a constant current throughout the duration of the deposit.

Once the current is applied, the electrically conductive support of which at least a portion of the surface is covered by a metal deposit may be removed from the solution in which it was immersed. It must be cleaned, especially with water (e.g. distilled water), before being dried, especially under vacuum or under an inert gas flow (argon, nitrogen, helium, etc.).

*Step (ii):*

Once the metal deposited on at least a portion of the surface of the electrically conductive support, the outer surface of the metal deposit is oxidized.

The oxidation step will advantageously be carried out in an atmosphere containing oxygen (e.g. air) or in the presence of HzO, preferably in an atmosphere containing oxygen (e.g. air).

This oxidation step will advantageously be carried out at an elevated temperature, in particular at a temperature of between 30 and 700°C, in particular between 50 and 500°C, in particular between 100 and 400°C.

An annealing step may be carried out following the oxidation step. This annealing step will advantageously be carried out at a temperature of between 50° C and 1000°C, in particular between 100°C and 400°C. This annealing step will be carried out advantageously under an inert gas atmosphere (Ar, $N_2$, He, etc.) or under vacuum. This annealing step will be carried out advantageously for a sufficiently long period, in particular for a time of between 10 minutes and 48 hours, in particular between 1 and 3 hours.

A high specific surface area is maintained after this oxidation step and optionally annealing step.

*Step (iii):*

An additional step of deposition of metal oxide on the surface of the metal deposit may optionally be carried out after step (ii). This will thus make it possible to have an additional layer of metal oxide on the surface of the metal deposit.

The metal oxide will be a copper oxide, and more particularly CuO.

This metal oxide deposit may advantageously be performed according to the following steps:

(1) immersing at least the portion of the electrically conductive support covered with a metal deposit whose external surface is oxidized obtained in step (ii) in a solution containing ions of the metal of the metal oxide to be deposited (i.e. copper ions) and advantageously water, and

(2) applying an electric potential between the electrically conductive support and a second electrode, the electric potential applied to the electrically conductive support being negative and then positive.

*Step (1):*

The solution containing the ions of the metal of the metal oxide to be deposited will be more particularly a solution containing a metal salt of the metal oxide to be deposited (i.e. copper salt), optionally introduced in a hydrated form. This metal salt, optionally in a hydrated form, may be any copper salt. For example, it may be $CuSO_4$, $CuCl_2$ or $Cu(ClO_4)_2$ or a mixture thereof.

It could also be envisaged to use metal complexes formed between the metal ion of the metal oxide to be deposited and one or more organic ligands such as, for example, porphyrins, amino acids or amines (e.g. imidazole, 1,4,8,11-tetraazacyclotetradecane (cyclam) or 1,4,8,11-tetramethyl-1,4,8,11-tetraazacyclotetradecane (Me4-cyclam), to introduce the metal ions into the solution. In particular it may be $CuCl_2$ complexed with one or more, in particular 1 or 2, organic ligands, preferably nitrogen-based organic ligands, such as amines, which may be in particular $Cu(imidazole)_2Cl_2$, $Cu(cyclam)Cl_2$ or $Cu(Me_4\text{-}cyclam)Cl_2$, and preferably $Cu(imidazole)_2Cl_2$.

The metal salt will be present in the solution advantageously at a concentration of between 0.1 mM and 10 M, in particular between 1 mM and 0.1 M.

The solution containing metal ions of the metal oxide to be deposited may be a solution in water and/or an organic solvent, especially in water or in a water / organic solvent mixture. The solvent used (water and/or organic solvent) will be selected so as to solubilize the metal salt. The organic solvent may be any suitable solvent such as acetonitrile, pyridine, tetrahydrofuran (THF), dimethylsulfoxide (DMSO) or dimethylformamide (DMF), especially acetonitrile. The water used will preferably be deionized water to better control the ionic composition of the solution.

The solution may also contain a salt that cannot be oxidized or reduced and therefore does not participate in the oxidation-reduction reaction but which allows conducting an electrical current. The nature of this salt is therefore not critical. It should be chosen so that it is soluble in the solvent used (water and/or organic solvent). It may be $TBAPF_6$ (tetrabutylammonium hexafluorophosphate) or $TBABF_4$ (tetrabutylammonium tetrafluoroborate).

The electrically conductive support will be totally or partially immersed in the solution containing the metal ions of the metal oxide to be deposited according to the surface of the support to be covered.

*Step (2):*

This deposition step by cyclic voltammetry comprises two phases, namely:

- the application of a current ramp between the electrically conductive support and a second electrode towards a negative electrical potential applied to the electrically conductive support: this phase allows the electrodeposition of metal on the surface of the metal deposit obtained at step (ii), the electrically conductive support then acting as a cathode and the second electrode playing the role of anode; then
- the application of a current ramp between the electrically conductive support and a second electrode to a positive electrical potential applied to the electrically conductive support: this phase allows the oxidation of the deposited metal on the surface of the metal deposit obtained at step (ii), the electrically conductive support then acting as an anode and the second electrode acting as a cathode.

This step (2) comprising the two aforementioned phases may be repeated once or more so as to optimize the deposition of metal oxide and the performance of the electrode obtained. Advantageously, step (2) is carried out 1 or 2 times, in particular 2 times.

The second electrode will advantageously be immersed in the solution containing the metal ions of the metal oxide to be deposited but may also be immersed in another electrolyte solution electrically connected to the solution containing the metal ions of the metal oxide to be deposited. The use of a single electrolyte solution, namely the solution containing the metal ions of the metal oxide to be deposited and water, remains preferred.

The nature of the second electrode is not critical. It is just necessary for performing the electrodeposition and then the oxidation. It may be for example a platinum or titanium electrode.

When applying the current with a negative potential applied to the electrically conductive support, a reduction reaction will take place at the cathode (electrically conductive support), namely the reduction of the metal ions to metal of oxidation degree 0 according to the following reaction with M representing the metal (i.e. copper) and x representing its initial oxidation state:

$$M^{x+} + xe^- \rightarrow M.$$

Similarly, an oxidation reaction will take place at the anode during the application of the current. The nature of this oxidation reaction is not crucial. It may be for example the oxidation of water.

This phase thus allows the electrodeposition of a thin layer of metal on the surface of the metal deposit obtained in step (ii).

When applying the current with a positive potential applied to the electroconductive medium in the presence of a source of oxygen (which may be water, hydroxide ions, oxygen or another source of oxygen, preferably water), an oxidation reaction will take place at the anode (electrically conductive support), namely the oxidation of the metal , for example according to the following reaction in the case of water as a source of oxygen with M representing the metal (i.e. copper) and x representing its degree of oxidation:

$$M + H_2O \rightarrow MO + 2\ e + 2\ H^+.$$

Similarly, a reduction reaction will occur at the cathode during the application of the current. The nature of this reduction reaction is not crucial. It could be for example the reduction of water

$$2\ H_2O + 2\ e^- \rightarrow H_2 + 2\ OH^-$$

This phase thus allows the oxidation of the thin layer of electrodeposited metal on the surface of the metal deposit obtained in step (ii).

This step (2) may advantageously be carried out by one or more, in particular 1 or 2, cycles of cyclic voltammetry, that is to say by application of a current linearly varying in time.

Once the metal oxide deposited, the electrically conductive support can be removed from the solution in which it was immersed. It must be cleaned, especially with water (e.g. distilled water), before being dried, especially under vacuum or under an inert gas flow (argon, nitrogen, helium, etc.).

Electrolysis cell

The electrolysis device comprises an anode and a cathode as defined above.

According to one embodiment, the electrolysis device will comprise also an anodic compartment and a cathodic compartment, advantageously separated by a membrane. The use of a membrane between the anodic and cathodic compartments allows for an easy separation of the reaction products formed in each compartment which are mainly gases.

Preferably the electrolysis device will be a flow electrolysis device.

The distance between the anode and the cathode (interelectrode distance) of the electrolysis device advantageously is comprised between 15 and 0.1 cm, preferably between 2 and 0.1cm. The use of a lower interelectrode distance allows reducing the overall cell resistance.

The membrane separating the anodic compartment and the cathodic compartment can be an anion exchange membrane (AEM), a cation exchange membrane (CEM) or a bipolar membrane, preferably an anion exchange membrane.

The anion exchange membrane will be useful in particular for the circulation of $CO_3^{2-}$ anion. It can be notably a Selemion™ AEM.

The cation exchange membrane can be in particular a proton exchange membrane (PEM) useful for the circulation of H' cation. It can be a Nafion® membrane. Nafion® is a copolymer of tetrafluoroethylene (Teflon®) and perfluoro-3,6-dioxa-4-methyl-7-octene-sulfonic acid.

The bipolar membrane is a layered ion exchange membrane comprising a first layer which is permeable to the anions and a second layer which is permeable to the cations.

When the electrolysis device is a flow electrolysis device, the anodic compartment and the cathodic compartment will each comprise an inlet and an outlet in order to allow the circulation of an anolyte solution through the anodic compartment and a catholyte solution through the cathodic compartment respectively.

The anodic compartment and the cathodic compartment can then each comprise a flow spacer linked to the inlet and to the outlet of the anodic or cathodic compartment respectively. The flow spacer allows an efficient flow of the electrolyte solution.

The flow spacer comprises an internal cavity connected to the inlet and the outlet and being in direct contact with the electrode (cathode or anode) and the membrane. Since gases are generated both in the anodic compartment (dioxygen) and in the cathodic compartment (hydrocarbons such as ethane or ethene), the form of the internal cavity of the flow spacer should be designed so as to allow an efficient evacuation of the gas bubbles generated during electrolysis. Advantageously, it will have a convex form such as a trapezoid (e.g. a parallelogram, such as a rhombus), an hexagon or an ellipse (e.g. with a high eccentricity), preferably with its thinner part positioned upward.

The flow spacer can be made in any chemically inert and electrically insulating material, for example a polymer such as PTFE (polytetrafluoroethylene - Teflon®), a polyurethane (PU), polypropylene (PP), a polyamide (PA), polyether ether ketone (PEEK) and the like or a ceramic such as alumina, aluminosilicate and the like.

To improve the tightness of the electrolysis device, sealing rings can be added respectively between the flow spacer and the membrane and between the flow spacer and the electrode (anode or cathode). It can be more particularly a sealing O-ring.

The sealing ring can be made in any chemically inert material, such as PTFE (polytetrafluoroethylene - Teflon®), a silicon, a fluoropolymer elastomer such as Viton®.

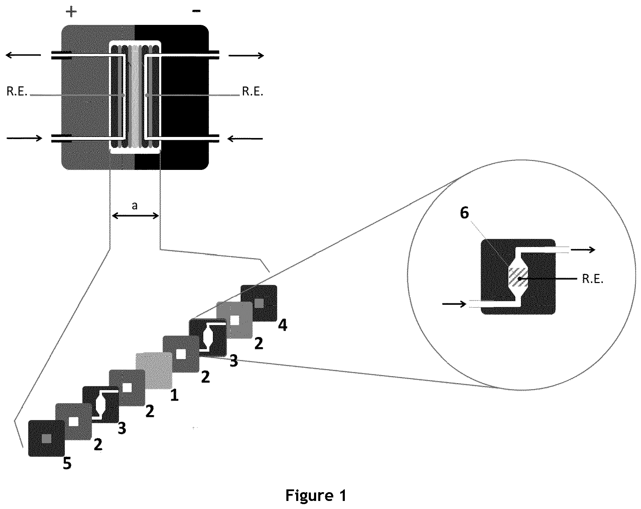

A preferred electrolysis device is based on a two-compartment flow electrolysis device containing an anion-exchange membrane between the anodic and cathodic compartments. A well-defined area of each working electrode (anode and cathode) will be exposed to the circulating electrolyte solution (anolyte and catholyte solutions respectively) thanks to the presence of a flow spacer (notably in PTFE). The spacers comprise an internal cavity having advantageously a trapezoidal or hexagonal shape to avoid bubbles' accumulation and resulting instability issues. The spacers can be connected to a peristatic pump allowing the thorough control of the flowing speed of the electrolyte solutions. The tightness of the set-up can be ensured by a series of sealing rings (e.g. silicon-based sealing O-rings) and by its embedment in a rigid frame (preferentially metallic). This electrolysis device allows for a very short interelectrode distance for minimal resistance while allowing simple products separation. Such a preferred electrolysis device is illustrated on Figure 1.

The electrolysis device will advantageously comprise a system to collect the gases formed in each electrolysis compartment. Thus a first collector system can be connected to the outlet of the cathodic compartment to collect the gases produced in this compartment, and in particular the hydrocarbons such as ethane or ethene. A second collector system can be connected to the outlet of the anodic compartment to collect the gas produced in this compartment, i.e. dioxygen. These collector systems also allow continuously evacuating and collecting the reaction products.

Source of electrical energy

The electrolysis device can be coupled to a source of electrical energy, such as a source of renewable electricity, which can be in particular an intermittent source of renewable energy such as a photovoltaic panel or a wind turbine.

However, any other source of electrical energy can be used.

**Method for converting $CO_2$ into hydrocarbons**

The electrolysis device is used in a method for reducing carbon dioxide ($CO_2$) into hydrocarbons (e.g. ethane, ethene, propylene, propane). Such a method comprises the following steps:

a) providing an electrolysis device comprising an anode and a cathode as defined above;
b) exposing the cathode of said electrolysis device to a $CO_2$-containing aqueous catholyte solution;
c) exposing the anode of said electrolysis device to an aqueous anolyte solution; and
d) applying an electrical current between the anode and the cathode in order to reduce the carbon dioxide into hydrocarbons.

Step a)

The electrolysis device is an electrolysis device as detailed above. It can be in particular a flow electrolysis device.

Step b)

The catholyte solution is a $CO_2$-containing aqueous catholyte solution. Preferably, the aqueous solution is saturated with $CO_2$, notably by bubbling the $CO_2$ gas directly into the solution.

The catholyte solution further comprises a salt of hydrogen carbonate ($HCO_3^-$), such as an alkali metal salt or a quaternary ammonium salt of hydrogen carbonate. The alkali metal can be potassium, sodium or cesium, preferably cesium. The quaternary ammonium can have the formula $NR_1R_2R_3R_4^+$ wherein $R_1$, $R_2$, $R_3$ and $R_4$, identical or different, preferably identical, are a ($C_1$-$C_6$)alkyl, such as methyl or ethyl. The quaternary ammonium can be in particular a tetramethylammonium or a tetraethylammonium. Preferably the salt of hydrogen carbonate is $CsHCO_3$. It should be noted that the continuous $CO_2$ bubbling in the catholyte solution allows regenerating the diffused bicarbonate anions.

The concentration of the salt of hydrogen carbonate advantageously is below 1M, notably below 0.5M. It can be comprised between 0.01M and 0.5M, notably between 0.5M and 0.2M. For example, it can be about 0.1M.

The catholyte solution is advantageously prepared using deionized water to better control the ionic composition of the solution.

Step c)

The anolyte solution is an aqueous anolyte solution.

The anolyte solution further comprises a salt of carbonate ($CO_3^{2-}$), such as an alkali metal salt or a quaternary ammonium salt of carbonate. The alkali metal can be potassium, sodium or cesium, preferably cesium. The quaternary ammonium can be as defined above and have the formula $NR_1R_2R_3R_4^+$ wherein $R_1$, $R_2$, $R_3$ and $R_4$, identical or different, preferably identical, are a ($C_1$-$C_6$)alkyl, such as methyl or ethyl. The quaternary ammonium can be in particular a tetramethylammonium or a tetraethylammonium. Preferably the salt of carbonate is $Cs_2CO_3$.

The concentration of the salt of carbonate advantageously is below 1M, notably below 0.5M. It can be comprised between 0.01M and 0.5M, notably between 0.5M and 0.2M. For example, it can be about 0.1M.

The anolyte solution is advantageously prepared using deionized water to better control the ionic composition of the solution.

The use of carbonate-based electrolyte solutions in both anodic and cathodic compartments provides high efficiency and stability to the electrolysis method. The presence of an anion exchange membrane allowing the circulation of $CO_3^{2-}$ anions is then preferred to avoid their accumulation on the membrane and consequent clogging, so that a continuous operation of the system at high current densities is possible.

Step d)

An electrical current is applied between the anode and the cathode in order to reduce the carbon dioxide into hydrocarbons, such as ethane, ethylene, propane propylene and the like. During this reduction step, other valuable reduction products can be formed such as alcohols (e.g. ethanol, propan-1-ol and isopropanol).

The electrical current applied advantageously has a potential difference (voltage) comprised between 10 and 1.5 V, preferably between 5 and 1.5 V.

When the electrical current is applied, reduction reactions occur at the anode and reduction reaction occurs at the cathode.

At the cathode, reduction reactions of $CO_2$ occur according to the following reaction and lead to the formation of hydrocarbons and alcohols, preferably in $C_2$ or $C_3$:

$$x\ CO_2 + (4x-2z-y)\ H^+ + (4x-2z-y)\ e^- \rightarrow C_xH_yO_z + (2x-z)\ H_2O$$

At the anode, an oxidation of water occurs according to the following reaction and leads to the formation of dioxygen and protons:

$$2H_2O \rightarrow O_2 + 4H^+ + 4e^-$$

The use of an electrolysis device as defined above allows obtaining a faradic yield (FY) above 30%, preferably above 50%.

The electrolysis device as defined above allows the conversion of $CO_2$ to hydrocarbons at current densities as high as 25 mA.cm$^{-2}$ obtained at a cell potential below 3 V, ensuring high efficiencies.

The present invention is illustrated by the following non-limitative examples and figures.

**LEGENDS OF THE FIGURES:**

    **Figure 1:** Schematic electrolyzer cell used in a method according to the invention with:

        (1) anion exchange membrane (e.g. thickness: 0.2 mm)
        (2) sealing O-ring (e.g. fiberglass reinforced silicone, thickness: 0.2 mm)
        (3) flowing spacer (e.g. PTFE, thickness: 3 mm)
        (4) anode
        (5) cathode
        (6) electrode area (cathode or anode) (e.g. about 1 cm$^2$)
        (a) interelectrode distance (e.g. 7 mm)
        R.E. Reference electrode
        the arrows representing the flows of the electrolyte solutions.

This electrolyzer cell has been used in all the examples, except otherwise mentioned, with the features indicated in parenthesis.

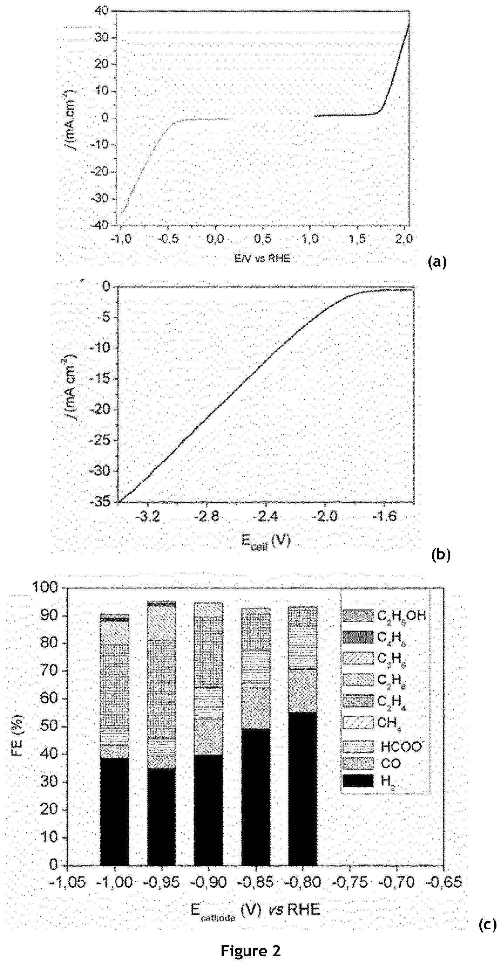

**Figure 2: a)** Linear sweep voltammetry (LSV) of DN-CuO cathode (light grey) and DN-CuO anode (black), using a scan rate of 10 mV.s$^{-1}$ (currents are uncorrected for resistive losses incurred within the electrolyte, all current densities are based on projected geometric area). **b)** *J-E* curve of the electrolyzer cell using DN-CuO electrodes. c) Faradaic efficiencies for $CO_2$ reduction products using DN-CuO cathode at different potentials. All measurements were carried out using the electrolyzer cell described in the examples below and illustrated on Figure 1 using an anion exchange membrane separating the cathodic (COz saturated 0.1 M $CsHCO_3$) and anodic (0.2 M $Cs_2CO_3$) compartments. Constant COz saturation was ensured by constant sparging of the cathodic electrolyte with $CO_2$ at 2.5 mL.min$^{-1}$.

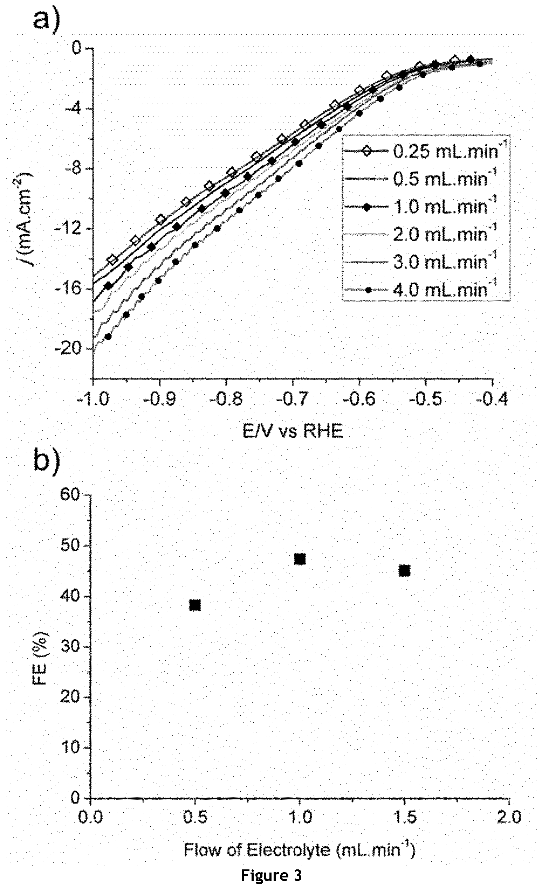

**Figure 3: a)** LSV of DN-CuO electrode for $CO_2$ reduction in 0.1M $NaHCO_3$ at different flow rates of electrolyte. **b)** Total faradaic efficiency (FE) of ethylene and ethane at -0.95V vs RHE (reversible hydrogen electrode) at different flow rates of electrolyte.

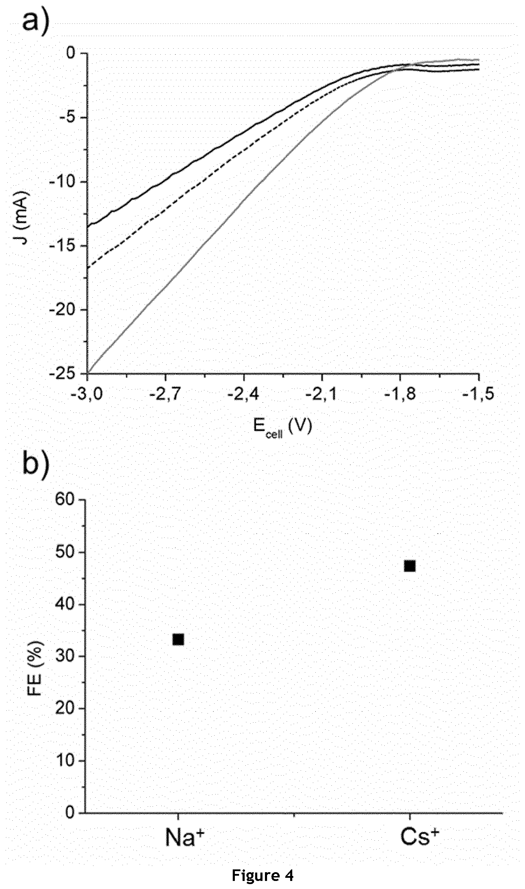

**Figure 4: a)** J-E curve of the electrolyzer cell using DN-CuO electrodes as both cathode and anode in different electrolytes: (black-solid line) cathodic solution - $CO_2$ saturated 0.1 M $NaHCO_3$ and anodic solution - 0.2 M $Na_2CO_3$, (black-dash line) cathodic solution - $CO_2$ saturated 0.1 M $KHCO_3$ and anodic solution - 0.2 M $K_2CO_3$, (light grey-solid line) cathodic solution - $CO_2$ saturated 0.1 M $CsHCO_3$ and anodic solution - 0.2 M $Cs_2CO_3$. **b)** FE of ethylene and ethane when cations are $Na^+$ and $Cs^+$.

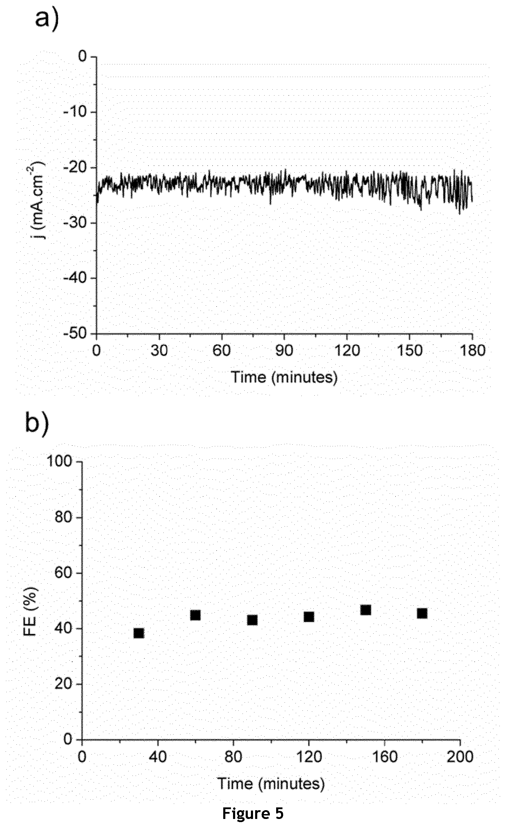

**Figure 5: a)** Long-term (3h) electrolysis for splitting $CO_2$ using flow cell with DN-CuO electrode as both cathode and anode and b) corresponding Faradaic efficiency for $C_2H_4 + C_2H_6$ during 3h $CO_2$ reduction electrolysis.

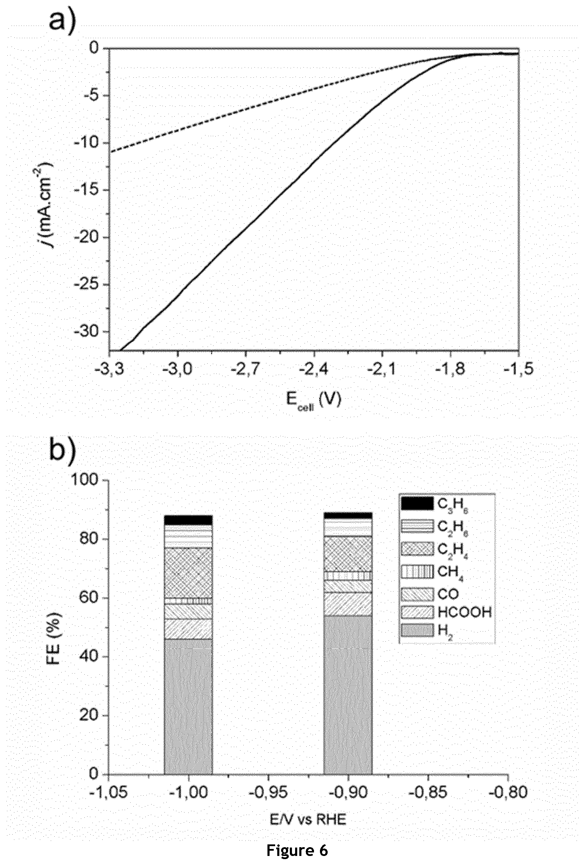

**Figure 6: a)** Comparison of cell potentials ($E_{cell}$) as a function of current density between the flow electrochemical cell (solid line) and a H-type electrochemical cell (dash line). In both setup DN-CuO electrodes were employed as both cathode and anode, using a solution of $CO_2$-saturated 0.1 M $CsHCO_3$ (pH 6.8) as catholyte, a solution of 0.2 M $Cs_2CO_3$ (pH 11) as anolyte, separated by a Selemion AEM. **b)** Faradaic efficiencies of $CO_2$ reduction in 0.1 M $CsHCO_3$-saturated $CO_2$ using DN-CuO in H-type electrochemical cell.

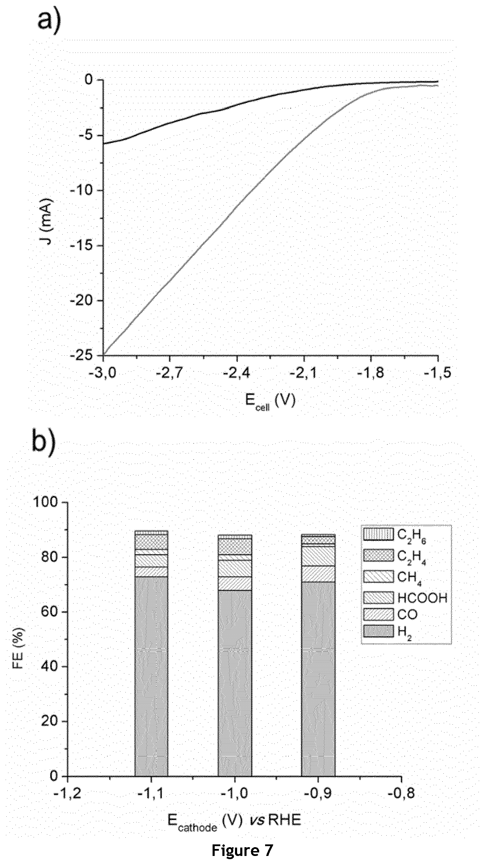

**Figure 7: a)** Current *vs.* cell voltage obtained in the flow cell: (light grey) DN-CuO was used as both cathode and anode, (black) Cu oxide plate electrode was used as both cathode and anode electrode. **b)** Faradaic efficiency of $CO_2$ reduction using Cu oxide plate electrode.

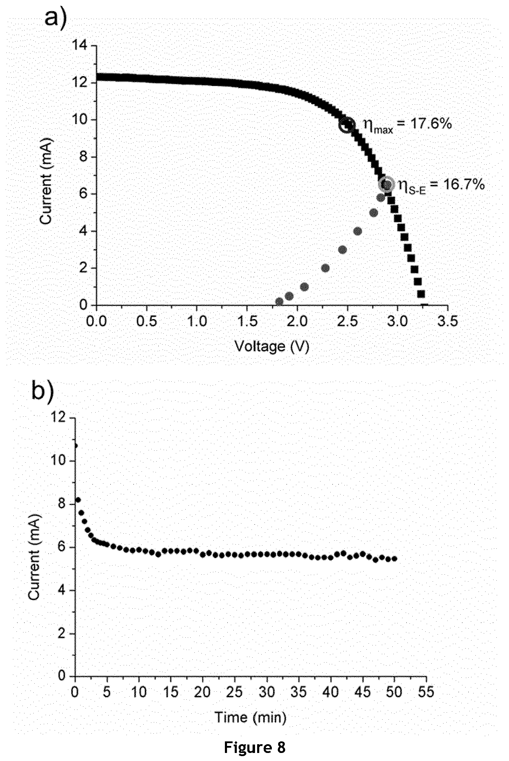

**Figure 8: a)** Current-potential characteristic of the perovskite mini-module under 1 sun, AM1.5G illumination (squares) and measured operating current of the electrolyzer cell (geometric areas of cathode = 0.35 cm$^2$ and anode = 0.85 cm$^2$, current measured after 5 min electrolysis) at various potentials (dots). **b)** Electrolyzer cell current as a function of photoelectrolysis time using the perovskite mini-module as the sole energy source.

**EXAMPLES:**

General considerations

Electrocatalytic measurements and electrolysis experiments in the flow electrochemical cell were carried out using a Bio-logic SP300 potentiostat. $H_2$ and gaseous $CO_2$ reduction products were analyzed by gas chromatography (GC) (SRI Instruments), Multi-Gas Analyzer #5 equipped with a HayeSep® D column and MoleSieve 5A column, thermal Conductivity Detector (TCD) and Flame Ionization Detector (FID) with methanizer using Argon as a carrier gas. GC was calibrated by using a standard gas mixture containing 2500 ppm of $H_2$, CO, $CH_4$, $C_2H_4$, $C_2H_6$, $C_3H_6$, $C_3H_8$, $C_4H_8$ and $C_4H_{10}$ in $CO_2$ (Messer). The liquid phase products were quantified using Ionic chromatography and Nuclear Magnetic Resonance (NMR) spectroscopy. Formate and oxalate were analyzed by ionic exchange chromatography (883 Basic IC, Metrohm). Ethanol was analyzed by $^1$H NMR spectroscopy using a Bruker AVANCE III 300 spectrometer. SEM images were acquired using a Hitachi S-4800 scanning electron microscope. TEM images were obtained on a JEM-2010F transmission electron microscope (JEOL) with an accelerating voltage of 200 kV.

The most relevant criteria to evaluate the performance of the electrical to chemical energy conversion device is the energy efficiency (EE). The thermoneutral potential ($E_{th}$) must then be introduced so that thermal losses are taken into account into the calculations avoiding any energy efficiency overestimation. The calculations are detailed below in the particular cases of ethane ($C_2H_6$) and ethene ($C_2H_4$), which are the targeted products herein.

$$2\ CO_2 + 2\ H_2O \rightarrow C_2H_4 + 3\ O_2 \qquad (2)$$

$$\Delta H(C_2H_4) = -2\Delta H(CO_{2\ (aq)}) - 2\Delta H(H_2O) + 3\Delta H(O_2)=1600.41\ kJ.mol^{-1} \qquad (3)$$

$$2\ CO_2 + 3\ H_2O \rightarrow C_2H_6 + 7/2\ O_2 \qquad (4)$$

$$\Delta H(C_2H_6) = -2\Delta H(CO_{2(aq)}) - 2\Delta H(H_2O) + 7/2\Delta H(O_2) = 1451.52 \; kJ.mol^{-1} \qquad (5)$$

$$E_{tn} = \Delta H/n \; (n \; is \; the \; number \; of \; electron \;) \qquad (6)$$

$$EE(C_2H_4 + C_2H_6) = (FY(C_2H_4) \times E_{th}(C_2H_4) + FY(C_2H_6) \times E_{th}(C_2H_6)) \; / \; Ucell \qquad (7)$$

$\Delta H$ = standard enthalpy of reaction; FY = faradaic yield of the catalytic reaction

General preparation of the electrolyser

• *Preparation of the electrodes*

Electrodes were prepared as described in Angew. Chem. Int. Ed. 56, 4792 (2017) and are named DN-CuO (dendritic nanostructured copper oxide material) in the following sections.

• *Flow electrochemical cell*

The scheme of the flow electrochemical cell is presented in Figure 1. The distance between cathode and anode is 0.7 cm. A Selemion™ AEM (Anion Exchange Membrane) separates the cathodic and anodic compartments. Each half-cell comprises, in sequence, the electrode, a 0.2 mm-thick sealing O-ring made from fiberglass-reinforced silicone, a 3 mm PTFE (polytetrafluoroethylene) flowing spacer and another O-ring before the membrane. The geometrical surface area of the working electrodes was chosen to be 1 $cm^2$ for all this study, unless otherwise specified. The PTFE spacers were designed using a trapezoidal shape for the electrolyte inlet/outlet and the connection with the tubing. Ag wire was used as pseudo-reference electrode and placed in both compartments and was calibrated with an aqueous Ag/AgCl reference electrode before each experiment. The electrode potentials were referred to RHE according to the following formula:

$$E(vs \; RHE) = E(vs \; Ag \; wire) + \Delta E + 0.2 + 0.059 \times pH$$

where the potential difference ($\Delta E$) between the Ag wire and the Ag/AgCl electrode was determined using the $E_{1/2}$ potential of $K_3Fe(CN)_6$ in 0.1M $CsHCO_3$ solution as a reference. Unless otherwise stated, catalytic activity was investigated in this setup using 0.1 M $CsHCO_3$ saturated with $CO_2$ (pH 6.8) at the cathode and 0.2 M $Cs_2CO_3$ (pH 11.0) at the anode, flowed through the two compartments at a constant flow of 1.0 mL.$min^{-1}$.

Example 1: Electrical to chemical energy conversion according to the invention

The catalytic activity of a full electrochemical cell comprising two identical 1 $cm^2$ DN-CuO electrodes for cathode and anode, a $CO_2$-saturated 0.1 M $CsHCO_3$ aqueous solution in the cathodic compartment and a 0.2 M $Cs_2CO_3$ aqueous solution in the anodic compartment flowing at 1 mL.$min^{-1}$ was assessed. A stable current density of 25 mA.$cm^{-2}$ at a cell potential of 2.95 V was obtained leading to an energy efficiency conversion of $CO_2$ towards ethene and ethane equal to 21%. The detail of the reduction products' faradaic yield is displayed in Figure 2. Among the $CO_2$ reduction products, $C_2H_4$ accounted for 37% FY, $C_2H_6$ for 12.8% FY, HCOOH for 7% FY and CO for 5%.

Example 2: Influence of the electrolyte flow rate

The influence of the electrolyte flow rate was tested, maintaining all other operating conditions described in Example 1. Increasing the electrolyte flow led to an increase of the cathodic activity of the DN-CuO as shown by linear sweep voltammetry studies (LSVs, Figure 3): at -1.0 V *vs*. RHE, -20 mA.$cm^{-2}$ were reached using a $CO_2$ flow of 4 mL.$min^{-1}$, in comparison with -15.5 mA.$cm^{-2}$ at 0.25 mL.$min^{-1}$.
The FE selectivity of $CO_2$ reduction to hydrocarbons was also varied at different electrolyte flow rates. The highest FE of ethylene and ethane was obtained at the flow rates of 1.0 mL.$min^{-1}$ and justifies the choice of this flow rate in further studies (Figure 3.b).

Example 3: Influence of the carbonate-based electrolyte cation

The influence of the carbonate-based electrolyte cation "$X^+$" was tested, maintaining all other operating conditions described in Example 1 (Figure 4). In each case, 0.1 M $XHCO_3$ was used along with 0.2 M $X_2CO_3$ as the catholyte

and anolyte respectively. At 3.0 V cell potential, -25 $mA.cm^{-2}$ were reached using $Cs^+$ as a cation, in comparison with -17 $mA.cm^{-2}$ and -13 $mA.cm^{-2}$ using $K^+$ and $Na^+$ respectively.

The FE selectivity of $CO_2$ reduction to hydrocarbons was also varied depending on the cation. The highest FE of 47% for ethylene and ethane was obtained using $Cs^+$ in comparison with 33% using $Na^+$ for instance and justifies the choice of this cation in further studies (Figure 4.b).

Example 4: Long-run operation of the system

Stability of the system was investigated over a 3h period in the flow cell maintaining all other operating conditions described in Example 1. Stable current density of 22 $mA.cm^{-2}$ was observed along with a stable total FY of 47% for ethane and ethene (Figure 5) preserving an energy efficiency of 21%.

Example 5: Advantages of the invention compared to an electrochemical H-cell set-up

The electrodes of the present invention were tested in a H-type electrolyzer maintaining all other operating conditions described in Example 1. The H-cell set-up is used in the literature (Nature Catalysis 2018, 1, 421-428) for catalytic performances testing, made of two glass half-cells separated by a defined membrane (anion exchange membrane) with an interelectrode distance of 6 cm.

To obtain a stable current of 25 $mA.cm^{-2}$, 4.8 V was needed in such a H-type electrolyzer. This should be compared with the electrolyzer of the present invention, for which a cell potential of only 2.95 V was sufficient to reach this current (Figure 6).

Using the H-type set-up, lower faradaic efficiencies were reached (-25% total FY for ethene and ethane) at about -0.90 V *vs.* RHE compared to the 50 % obtained at - 0.95 V *vs.* RHE obtained in the flow conditions. The resulting energy efficiency for ethylene and ethane using this H-cell set-up is only 5.4%, which is significantly lower than when using the flow cell of the present invention (49.8%).

Example 6: Advantage of the invention compared to non-nanostructured electrodes

The electrolyzer of the present invention was tested using non-nanostructured Cu-based electrodes while maintaining all other operating conditions described in Example 1. These Cu oxide plate electrodes were fabricated by annealing flat Cu foil (1.0 $cm^2$) under air condition at 300°C for 30 min before depositing a Cu oxide nanoparticle layer (following DN-CuO synthesis). These steps are the equivalent of steps (ii) and (iii) described above and have been performed in the same conditions as for preparing DN-CuO in example 1 (using $Cu(imidazole)_4Cl_2$ as copper precursor in step (iii)).

At a cell potential of 3.0 V, only 6.0 mA was reached (Figure 7) in comparison with the 25 mA obtained using the synergetic combination of electrolyzer and DN-CuO electrodes according to the present invention. As such, the energy efficiency for ethylene and ethane formation with non-nanostructured electrodes is only 1.3% in comparison with the record 21% presented in the reported invention.

Example 7: Engineering of a fully integrated solar-to-fuel conversion device

The electrolysis cell (EC) according to the invention was coupled with high performing perovskite photovoltaic cell (PV) (Science, 2016, 360, 6392) mini-module made of two series of three perovskite solar cells connected in parallel as an electrical power source. The full PV-EC system demonstrated a 2.3% solar-to-hydrocarbons ($\eta_{S-H}$) efficiency calculated as follows:

$$\eta_{S-H} = \eta_{S-E} \times EE(C_2H_4 + C_2H_6)$$

with $\eta_{S-E}$ being the solar-to-electricity efficiency of the perovskite mini-module obtained experimentally as displayed in Figure 8.

This performance sets a new benchmark for an inexpensive all earth-abundant PV-EC system.

**Claims**

**1.** A method for reducing carbon dioxide ($CO_2$) into hydrocarbons comprising the following steps:

a) providing an electrolysis device comprising an anode and a cathode;

b) exposing the cathode of said electrolysis device to a COz-containing aqueous catholyte solution;

c) exposing the anode of said electrolysis device to an aqueous anolyte solution; and

d) applying an electrical current between the anode and the cathode in order to reduce the carbon dioxide into hydrocarbons;

wherein the catholyte solution comprises a salt of hydrogen carbonate, and the anolyte solution comprises a salt of carbonate.

wherein the anode and the cathode each are an electrode comprising an electrically conductive support of which at least a part of the surface is covered by a metal deposit of copper,

wherein the metal deposit may comprise other metals than copper selected from iron, nickel, zinc, cobalt, manganese, titanium, gold, silver, lead, ruthenium, iridium and a mixture thereof, said other metals representing no more than 30% by weight of the metal deposit,

wherein the surface of the metal deposit is in an oxidized form and the metal deposit has a specific surface area greater than or equal to 1 m$^2$/g, the specific surface area being determined by the BET (Brunauer, Emmett and Teller) method,

wherein the electrode is obtainable by a method comprising the following successive steps:

(i) electroplating copper on at least a portion of the surface of an electrically conductive support to form a metal deposit of copper on said at least a portion of the surface of the electrically conductive support,

(ii) oxidation of the surface of said metal deposit, and

(iii) optionally deposition of metal oxide on the surface of the metal deposit.

2. The method according to claim 1, wherein the electrically conductive support comprises an electrically conductive material selected from a metal such as copper, steel, aluminum, zinc or titanium; a metal oxide such as Fluorine-doped Titanium Oxide (FTO) or Indium Tin Oxide (ITO); a metal sulphide such as cadmium sulphide or zinc sulphide; carbon in particular in the form of carbon felt, graphite, vitreous carbon, or boron-doped diamond; a semiconductor such as silicon; and a mixture thereof.

3. The method according to any one of claims 1 to 2, wherein the metal deposit has a thickness comprised between 10 $\mu$m and 2 mm, notably between 50 $\mu$m and 0.5 mm, preferably between 70 $\mu$m and 300 $\mu$m.

4. The method according to any one of claims 1 to 3, wherein the metal deposit has a specific surface area comprised between 1 m$^2$/g and 500 m$^2$/g, for example between 1 m$^2$/g and 200 m$^2$/g, notably between 2 m$^2$/g and 100 m$^2$/g, preferably between 3 m$^2$/g and 50 m$^2$/g.

5. The method according to any one of claims 1 to 4, wherein the metal deposit has a porous structure with an average pore size of between 10 $\mu$m and 500 $\mu$m, in particular between 20 $\mu$m and 200 $\mu$m, preferably between 30 $\mu$m and 70 $\mu$m, the average pore size being determined by means of photographs obtained by Scanning Electron Microscopy (SEM).

6. The method according to any one of claims 1 to 5, wherein the distance between the anode and the cathode is comprised between 15 and 0.1 cm, preferably between 2 and 0.1 cm.

7. The method according to any one of claims 1 to 6, wherein the electrolysis device comprises an anodic compartment and a cathodic compartment separated by a membrane, preferably an anion exchange membrane.

8. The method according to claim 7, wherein the anodic compartment and the cathodic compartment each comprise an inlet and an outlet intended to allow the circulation of an anolyte solution through the anodic compartment and a catholyte solution through the cathodic compartment respectively.

9. The method according to claim 8, wherein the anodic compartment and the cathodic compartment each comprise a flow spacer linked to the inlet and to the outlet of the anodic or cathodic compartment respectively, the flow spacer being a system that guides the flow of the anolyte or catholyte solution from the inlet to the outlet of the anodic or cathodic compartment respectively.

10. The method according to claim 9, wherein the flow spacer is separated from the anode or the cathode and from the membrane by a sealing ring.

**11.** The method according to any one of claims 1 to 10, wherein the electrolysis device is coupled to a source of an electrical energy, in particular an intermittent source of renewable energy such as a photovoltaic panel or a wind turbine.

**12.** The method according to any one of claims 1 to 11, wherein the catholyte solution comprises an alkali metal salt or a quaternary ammonium salt of hydrogen carbonate, in particular a cesium, potassium, sodium, tetramethylammonium or tetraethylammonium salt of hydrogen carbonate, preferably $CsHCO_3$, and wherein the anolyte solution comprises an alkali metal salt or a quaternary ammonium salt of carbonate, in particular a cesium, potassium, sodium, tetramethylammonium or tetraethylammonium salt of carbonate, preferably $Cs_2CO_3$.

**13.** The method according to any one of claims 1 to 12, wherein the electrical current applied between the anode and the cathode has a potential difference comprised between 10 and 1.5 V, preferably between 5 and 1.5 V.

**Patentansprüche**

**1.** Verfahren zur Reduktion von Kohlendioxid ($CO_2$) zu Kohlenwasserstoffen, das die folgenden Schritte umfasst:

a) Bereitstellen einer Elektrolysevorrichtung, die eine Anode und eine Kathode umfasst;
b) Aussetzen der Kathode der Elektrolysevorrichtung gegenüber einer $CO_2$-haltigen wässrigen Katholytlösung;
c) Aussetzen der Anode der Elektrolysevorrichtung gegenüber einer wässrigen Anolytlösung; und
d) Anlegen eines elektrischen Stroms zwischen der Anode und der Kathode, um das Kohlendioxid zu Kohlenwasserstoffen zu reduzieren;
wobei die Katholytlösung ein Salz von Hydrogencarbonat umfasst und die Anolytlösung ein Salz von Carbonat umfasst,
wobei die Anode und die Kathode jeweils eine Elektrode sind, die einen elektrisch leitfähigen Träger umfasst, von dem mindestens ein Teil der Oberfläche durch eine Metallabscheidung aus Kupfer bedeckt ist,
wobei die Metallabscheidung andere Metalle als Kupfer umfassen kann, die ausgewählt werden aus Eisen, Nickel, Zink, Kobalt, Mangan, Titan, Gold, Silber, Blei, Ruthenium, Iridium und einem Gemisch davon, wobei die anderen Metalle nicht mehr als 30 Gew.-% der Metallabscheidung ausmachen,
wobei die Oberfläche der Metallabscheidung in einer oxidierten Form vorliegt und die Metallabscheidung eine spezifische Oberfläche von größer oder gleich 1 $m^2$/g aufweist, wobei die spezifische Oberfläche durch die BET-Methode (Brunauer, Emmett und Teller) bestimmt wird,
wobei die Elektrode erhältlich durch ein Verfahren erhalten werden ist, das die folgenden aufeinanderfolgenden Schritte umfasst:

(i) Elektroplattieren von Kupfer auf mindestens einem Abschnitt der Oberfläche eines elektrisch leitfähigen Trägers, um eine Metallabscheidung von Kupfer auf dem mindestens einen Abschnitt der Oberfläche des elektrisch leitfähigen Trägers zu bilden,
(ii) Oxidieren der Oberfläche der Metallabscheidung, und
(iii) wahlweise Abscheiden von Metalloxid auf der Oberfläche der Metallabscheidung.

**2.** Verfahren nach Anspruch 1, wobei der elektrisch leitfähige Träger ein elektrisch leitfähiges Material umfasst, das ausgewählt wird aus einem Metall, wie beispielswiese Kupfer, Stahl, Aluminium, Zink oder Titan; einem Metalloxid, wie beispielsweise fluordotiertes Titanoxid (FTO) oder Indiumzinnoxid (ITO); einem Metallsulfid, wie beispielsweise Cadmiumsulfid oder Zinksulfid; Kohlenstoff, insbesondere in der Form von Kohlenstofffilz, Grafit, Glaskohlenstoff oder bordotiertem Diamant; einem Halbleiter, wie beispielsweise Silizium; und einem Gemisch davon.

**3.** Verfahren nach einem der Ansprüche 1 bis 2, wobei die Metallabscheidung eine Dicke von zwischen 10 $\mu$m und 2 mm, insbesondere zwischen 50 $\mu$m und 0,5 mm, vorzugsweise zwischen 70 $\mu$m und 300 pm, aufweist.

**4.** Verfahren nach einem der Ansprüche 1 bis 3, wobei die Metallabscheidung eine spezifische Oberfläche von zwischen 1 $m^2$/g und 500 $m^2$/g, zum Beispiel zwischen 1 $m^2$/g und 200 $m^2$/g, insbesondere zwischen 2 $m^2$/g und 100 $m^2$/g, vorzugsweise zwischen 3 $m^2$/g und 50 $m^2$/g, aufweist.

**5.** Verfahren nach einem der Ansprüche 1 bis 4, wobei die Metallabscheidung eine poröse Struktur mit einer durchschnittlichen Porengröße von zwischen 10 $\mu$m und 500 pm, insbesondere zwischen 20 $\mu$m und 200 pm, vorzugsweise zwischen 30 $\mu$m und 70 pm, aufweist, wobei die durchschnittliche Porengröße mittels Fotografien bestimmt wird, die durch Rasterelektronenmikroskopie (SEM) erhalten werden.

6. Verfahren nach einem der Ansprüche 1 bis 5, wobei der Abstand zwischen der Anode und der Kathode zwischen 15 und 0,1 cm, vorzugsweise zwischen 2 und 0,1 cm, beträgt.

7. Verfahren nach einem der Ansprüche 1 bis 6, wobei die Elektrolysevorrichtung eine Anodenkammer und eine Kathodenkammer umfasst, die durch eine Membran, vorzugsweise eine Anionenaustauschmembran, getrennt sind.

8. Verfahren nach Anspruch 7, wobei die Anodenkammer und die Kathodenkammer jeweils einen Einlass und einen Auslass umfassen, die dazu bestimmt sind, den Umlauf einer Anolytlösung durch die Anodenkammer beziehungsweise einer Katholytlösung durch die Kathodenammer zu ermöglichen.

9. Verfahren nach Anspruch 8, wobei die Anodenkammer und die Kathodenkammer jeweils einen Strömungsabstandshalter umfassen, der mit dem Einlass und dem Auslass der Anoden- beziehungsweise Kathodenkammer verbunden ist, wobei der Strömungsabstandshalter ein System ist, das die Strömung der Anolyt- oder Katholytlösung vom Einlass zum Auslass der Anoden- beziehungsweise Kathodenkammer führt.

10. Verfahren nach Anspruch 9, wobei der Strömungsabstandshalter von der Anode oder der Kathode und von der Membran durch einen Dichtring getrennt ist.

11. Verfahren nach einem der Ansprüche 1 bis 10, wobei die Elektrolysevorrichtung an eine elektrische Energiequelle, insbesondere eine zeitweilige erneuerbare Energiequelle, wie beispielsweise ein Photovoltaikmodul oder eine Windturbine, gekoppelt ist.

12. Verfahren nach einem der Ansprüche 1 bis 11, wobei die Katholytlösung ein Alkalimetallsalz oder ein quaternäres Ammoniumsalz von Hydrogencarbonat, insbesondere einem Caesium-, Kalium-, Natrium-, Tetramethylammonium- oder Tetraethylammioniumsalz von Hydrogencarbonat, vorzugsweise $CsHCO_3$, umfasst, und wobei die Anolytlösung ein Alkalimetallsalz oder ein quaternäres Ammoniumsalz von Carbonat, insbesondere einem Caesium-, Kalium-, Natrium-, Tetrametylammonium- oder Tetraethylammioniumsalz von Carbonat, vorzugsweise $Cs_2CO_3$, umfasst.

13. Verfahren nach einem der Ansprüche 1 bis 12, wobei der elektrische Strom, der zwischen der Anode und der Kathode angelegt wird, eine Potentialdifferenz aufweist, die zwischen 10 und 1,5 V, vorzugsweise zwischen 5 und 1,5 V, beträgt.

**Revendications**

1. Procédé pour réduire du dioxyde de carbone ($CO_2$) en hydrocarbures, comprenant les étapes suivantes :

   a) fourniture d'un dispositif d'électrolyse comprenant une anode et une cathode ;
   b) exposition de la cathode dudit dispositif d'électrolyse à une solution aqueuse de catholyte contenant du $CO_2$ ;
   c) exposition de l'anode dudit dispositif d'électrolyse à une solution aqueuse d'anolyte ; et
   d) application d'un courant électrique entre l'anode et la cathode afin de réduire le dioxyde de carbone en hydrocarbures ;
   dans lequel la solution de catholyte comprend un sel d'hydrogénocarbonate, et la solution d'anolyte comprend un sel de carbonate,
   dans lequel l'anode et la cathode sont chacune une électrode comprenant un support électriquement conducteur dont au moins une partie de la surface est recouverte par un dépôt métallique de cuivre,
   dans lequel le dépôt métallique peut comprendre des métaux autres que le cuivre choisis parmi le fer, le nickel, le zinc, le cobalt, le manganèse, le titane, l'or, l'argent, le plomb, le ruthénium, l'iridium et un mélange de ceux-ci, lesdits autres métaux représentant au plus 30 % en poids du dépôt métallique,
   dans lequel la surface du dépôt métallique est sous une forme oxydée et le dépôt métallique a une surface spécifique supérieure ou égale à 1 $m^2$/g, la surface spécifique étant déterminée par la méthode BET (Brunauer, Emmett et Teller),
   dans lequel l'électrode est susceptible d'être obtenue par un procédé comprenant les étapes successives suivantes :

(i) placage électrolytique de cuivre sur au moins une partie de la surface d'un support électriquement conducteur pour former un dépôt métallique de cuivre sur ladite au moins une partie de la surface du support électriquement conducteur,

(ii) oxydation de la surface dudit dépôt métallique, et

(iii) éventuellement déposition d'oxyde métallique sur la surface du dépôt métallique.

2. Procédé selon la revendication 1, dans lequel le support électriquement conducteur comprend un matériau électriquement conducteur choisi parmi un métal tel que le cuivre, l'acier, l'aluminium, le zinc ou le titane ; un oxyde métallique tel que l'oxyde de titane dopé au fluor (FTO) ou l'oxyde d'indium et d'étain (ITO) ; un sulfure métallique tel que le sulfure de cadmium ou le sulfure de zinc ; le carbone, en particulier sous la forme de feutre de carbone, de graphite, de carbone vitreux, ou de diamant dopé au bore ; un semi-conducteur tel que le silicium ; et un mélange de ceux-ci.

3. Procédé selon l'une quelconque des revendications 1 et 2, dans lequel le dépôt métallique a une épaisseur comprise entre 10 $\mu$m et 2 mm, notamment entre 50 $\mu$m et 0,5 mm, de préférence entre 70 $\mu$m et 300 $\mu$m.

4. Procédé selon l'une quelconque des revendications 1 à 3, dans lequel le dépôt métallique a une surface spécifique comprise entre 1 m$^2$/g et 500 m$^2$/g, par exemple entre 1 m$^2$/g et 200 m$^2$/g, notamment entre 2 m$^2$/g et 100 m$^2$/g, de préférence entre 3 m$^2$/g et 50 m$^2$/g.

5. Procédé selon l'une quelconque des revendications 1 à 4, dans lequel le dépôt métallique a une structure poreuse avec une taille de pore moyenne comprise entre 10 $\mu$m et 500 pm, en particulier entre 20 $\mu$m et 200 pm, de préférence entre 30 $\mu$m et 70 pm, la taille de pore moyenne étant déterminée au moyen de photographies obtenues par microscopie électronique à balayage (MEB).

6. Procédé selon l'une quelconque des revendications 1 à 5, dans lequel la distance entre l'anode et la cathode est comprise entre 15 et 0,1 cm, de préférence entre 2 et 0,1 cm.

7. Procédé selon l'une quelconque des revendications 1 à 6, dans lequel le dispositif d'électrolyse comprend un compartiment anodique et un compartiment cathodique séparés par une membrane, de préférence une membrane échangeuse d'anions.

8. Procédé selon la revendication 7, dans lequel le compartiment anodique et le compartiment cathodique comprennent chacun une entrée et une sortie destinées à permettre la circulation d'une solution d'anolyte à travers le compartiment anodique et d'une solution de catholyte à travers le compartiment cathodique respectivement.

9. Procédé selon la revendication 8, dans lequel le compartiment anodique et le compartiment cathodique comprennent chacun une entretoise d'écoulement liée à l'entrée et à la sortie du compartiment anodique ou cathodique respectivement, l'entretoise d'écoulement étant un système qui guide l'écoulement de la solution d'anolyte ou de catholyte de l'entrée à la sortie du compartiment anodique ou cathodique respectivement.

10. Procédé selon la revendication 9, dans lequel l'entretoise d'écoulement est séparée de l'anode ou de la cathode et de la membrane par une bague d'étanchéité.

11. Procédé selon l'une quelconque des revendications 1 à 10, dans lequel le dispositif d'électrolyse est couplé à une source d'énergie électrique, en particulier une source intermittente d'énergie renouvelable telle qu'un panneau photovoltaïque ou une éolienne.

12. Procédé selon l'une quelconque des revendications 1 à 11, dans lequel la solution de catholyte comprend un sel hydrogénocarbonate de métal alcalin ou d'ammonium quaternaire, en particulier un sel hydrogénocarbonate de césium, potassium, sodium, tétraméthylammonium ou tétraéthylammonium, de préférence CsHCO$_3$, et dans lequel la solution d'anolyte comprend un sel carbonate de métal alcalin ou d'ammonium quaternaire, en particulier un sel carbonate de césium, potassium, sodium, tétraméthylammonium ou tétraéthylammonium, de préférence Cs$_2$CO$_3$.

13. Procédé selon l'une quelconque des revendications 1 à 12, dans lequel le courant électrique appliqué entre l'anode et la cathode a une différence de potentiel comprise entre 10 et 1,5 V, de préférence entre 5 et 1,5 V.

Figure 1

(a)

(b)

(c)

**Figure 2**

a)

b)

**Figure 3**

a)

b)

Figure 4

a)

b)

Figure 5

Figure 6

a)

b)

Figure 7

Figure 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017186454 A1

- WO 2012082717 A2

**Non-patent literature cited in the description**

- **YEO et al.** *ACS Sustainable Chem. Eng.,* 2017, vol. 5, 9191-9199
- **AGER et al.** *Energy Environ. Sci.,* 2017, vol. 10, 2222-2230
- **FE ; CO ; SAVÉANT et al.** *PNAS,* 02 May 2016
- **SN ; CU ; GRÄTZEL et al.** *Nat. Energy,* 2017, vol. 2, 17087

- *ACS Catal,* 2016, vol. 6, 3092
- **HUAN et al.** *Angew. Chem. Int. Ed.,* 2017, vol. 56, 4792-4796
- *Energy Environ. Sci.,* 2017, vol. 10, 2222-2230
- *Angew. Chem. Int. Ed.,* 2017, vol. 56, 4792
- *Nature Catalysis,* 2018, vol. 1, 421-428
- *Science,* 2016, vol. 360, 6392